# EUROPEAN PATENT APPLICATION

(11) **EP 4 806 594 A1**
(43) Date of publication of application: **16.09.2026**
(21) Application number: 26163452.1
(22) Date of filing: 10.03.2026
(51) Int. Cl.: B25J 5/00

(54) **PARCEL DELIVERY METHOD, USING A DELIVERY VAN AND AT LEAST ONE DELIVERY ROBOT**

(30) Priority: 14.03.2025 CH 2512025
(71) Applicant: RIVR Technologies AG, 8050 Zürich (CH)
(72) Inventor: Wellhausen, Lorenz Julian, 8005 Zurich (CH); Bjelonic, Marko, 8001 Zurich (CH)
(74) Representative: Prins Intellectual Property AG

(57) **Abstract**

The disclosed invention consists of a parcel delivery method, using a delivery van transporting at least one autonomous ground delivery robot (2) to a place of arrival, wherein the delivery robot (2) comprises a torso (20) with integrated electronics (202) and attached container (201) and at least four individual and independently controllable wheeled legs (21), each comprising a hip joint (210), an upper leg (211), a knee joint (212), a lower leg (213), and a wheel (214) with associated motor (2140), wherein the delivery robot (2) can deliver parcels from a loading area of the delivery van (1) to a customer's location, avoiding additional robot loading infrastructure. This is reached by jumping out of the delivery robot (2) with the container (201) and loaded parcel from the loading area and later autonomous climbing back of the delivery robot (2) with its wheeled legs (21) in four gait cycles.

## Description

### TECHNICAL FIELD

The present invention describes a parcel delivery method, using a delivery van transporting at least one autonomous ground delivery robot to a place of arrival, wherein the delivery robot comprises a torso with integrated electronics and attached container and at least four individual and independently controllable wheeled legs, each comprising a hip joint, an upper leg, a knee joint, a lower leg, and a wheel with associated motor, wherein the delivery robot can deliver parcels from a loading area of the delivery van to a customer's location.

### STATE OF THE ART

GB2573383 shows a process of delivering parcels to customers is efficiently managed by integrating a delivery van with an autonomous delivery robot. This innovative system combines a compact, box-shaped delivery robot with a hybrid or autonomous vehicle to streamline cargo handling and delivery processes.

The vehicle is designed as a hybrid or autonomous delivery van. The delivery robot is a compact, box-shaped entity with multiple wheels, enabling independent operation or docking with the van for seamless cargo handling. Its lightweight construction allows it to carry parcels while maintaining efficiency and stability. Utilizing infrared sensors, GPS technology, and AI-driven navigation systems, the robot can map routes, avoid obstacles, and communicate in real-time with the vehicle or a central hub, ensuring precise and efficient operation.

The system includes interfaces like screens or LED indicators to provide real-time feedback on environmental conditions and task status, enhancing human-robot interaction and user understanding of operations.

Emphasizing weather resistance and efficient docking mechanisms, the system ensures smooth cargo handling and integration with the vehicle for seamless operation. The focus is on delivering goods efficiently and accurately while minimizing human intervention.

This system has the potential to revolutionize urban logistics by enhancing delivery efficiency through advanced automation. Continued development is essential to address technical and operational challenges for widespread adoption. However, challenges such as battery life, maintenance, and operational reliability require further refinement to ensure practicality in real-world conditions.

With this and other known solutions, cranes or a lift or other infrastructure were always required to lift the delivery robot out of the van and load it back in again after parcel delivery. Even if the delivery robot is equipped with several legs and can be moved automatically on different terrains, getting in and out has so far been solved as rolling exit and entry always required additional infrastructure.

### DESCRIPTION OF THE INVENTION

The aim of the present invention is to create a parcel delivery method, using a delivery van transporting at least one special delivery robot to a place of arrival, so that the delivery robot can get out of the delivery van, move to a destination address, deliver a parcel there, return to the delivery van and get back in again autonomously, which can be done with increased last-mile delivery efficiency.

Additional robot loading infrastructure can be completely avoided, resulting in simpler, more cost-effective and faster last-mile delivery.

This delivery robot system is achieved by designing a delivery robot with one or two pairs of legs, each with hip joints and knee joints, with motor controlled wheels attached to the ends of the legs, and using appropriately programmed electronics that ensure sudden exit movement from the van and a step-like entry movement into the van.

### BRIEF DESCRIPTION OF THE DRAWINGS

Further understanding of various aspects of the invention can be obtained by reference to the following detailed description in conjunction with the associated drawings, which are described briefly below.

A preferred exemplary embodiment of the subject matter of the invention is described below in conjunction with the attached drawings.
- FIG. 1: is a sectional view through a delivery van loaded with three delivery robots, which also are loaded with parcels before start of the delivery van.
- FIG. 2: shows a schematic perspective view of a delivery robot as part of the delivery system and suitable for the delivery method, optionally controlled with an additional external computer hardware and neural network, described here.
- FIG. 3a to FIG.3d: show schematic views of the delivery process in different subsequent steps.

### DESCRIPTION

A delivery process for long-distance transportation and subsequent last-mile delivery of parcels to customers is achieved by the here presented delivery system and method based on a delivery van 1 and at least one delivery robot 2, as described in the following.

The delivery van 1 for the long-distance transportation has an interior in which at least one delivery robot 2 for last-mile delivery is parked on a loading area and which, after reaching a destination address, can move autonomously out of the delivery van 1 from its loading area without the use of additional exit aids such as ramps. The delivery robot 2 can also be teleoperated, i.e. remotely controlled by a human.

The delivery robot 2 can be loaded in advance at a local distribution center, so that the delivery robot 2 is transported loaded by delivery van 1, or it can be loaded by a person or a loading device during the journey in the interior of delivery van 1. When loading in the interior of the delivery van 1 during the journey or at the place of arrival, the same delivery robot 2 can of course be loaded several times.

Here ground delivery robots 2, as robots with legs and wheels are used for last-mile delivery, that navigate city streets and sidewalks to deliver goods, for example parcels with print media, electronics or even food. The delivery robot 2, which can be used for carrying out the delivery procedure for the last mile in an improved manner, is described below.

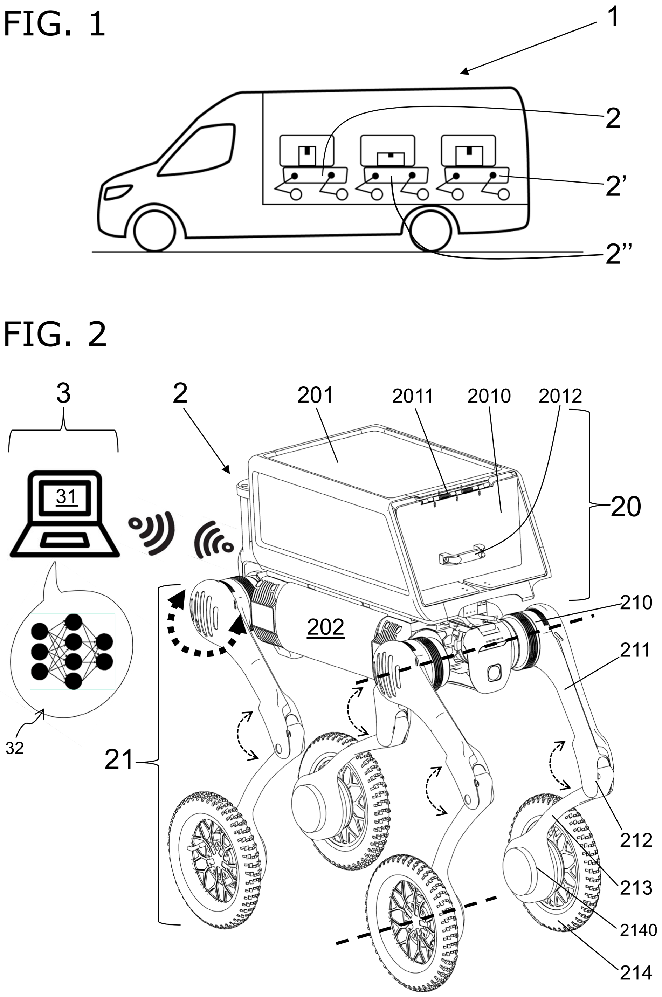

Fig. 2 shows a perspective view of a suitable delivery robot 2 with a torso 20 and four wheeled legs 21, forming articulated limbs. Each wheeled leg 21 comprises a hip joint 210, an upper leg 211, a knee joint 212, a lower leg 213, and a wheel 214, wherein at each wheel 214 a wheel motor 2140 is attached.

For clarity, in Fig. 2 the reference signs corresponding to the wheeled legs 21 are shown only for one of the wheeled legs 21. All wheeled legs 21 are of the same design, either two or preferably four. Here the version with four wheeled legs 21 is described as example in detail.

The delivery robot 2 further is equipped with an electronics 202, integrated in the torso 20, comprising a computation unit, a sensor unit, a steering unit and a send/receive unit, which all are software controlled. We are using here a combined computation unit and steering unit.

At least one energy source and at least one sensor are connected to the electronics 202. The electronics 202 is operatively connected to the at least one energy source, the at least one sensor and to the hip joint 210, the knee joint 212, and the wheel motor 2140 of every wheeled leg 21.

The torso 20 is shaped here as an elongated component connecting the wheeled legs 21, on whose side facing away from the wheeled legs 21 a container 201 for various parcels is attached. The container 201 comprises multiple side walls and a storage space which can be opened and closed by means of a container flap 2010 attached via a hinge 2011 at the container 201. A handle 2012 is attached to the container flap 2010 to make it easier to open the container 201 using the container flap 2010. The container flap 2010, which is optionally controlled by the electronics 202 and can be opened by known means using for example a smart phone, is also possible.

The length of the torso 20 must be such that all four wheeled legs 21 can pivot freely in the area of their hip joints 210, as indicated by the dashed double arrow. More precisely, the torso 20 is connected to the hip joint 210 of each of the four wheeled legs 21, which in turn is connected to the upper leg 211 of the corresponding wheeled leg 21. The hip joint 210 of every wheeled leg 21 is realized here by means of multiple hip joint components, which allow each wheeled leg 21 to be pivoted about a pivot axis shown as a dashed line.

The knee joint 212 of every wheeled leg 21 is realized here as a revolute joint allowing for changes of the angle between the corresponding upper leg 211 and the corresponding lower leg 213. The possible independent pivoting movements of the individual knee joints 212 are indicated in Figure 2 by four dashed double arrows, allowing for a shortening of the distance from the top of the upper legs 211 to the corresponding wheel 214.

The delivery robot 2 presented here is capable of omnidirectional movement of each wheeled leg 21 on any terrain without the use of steerable wheels or a steering mechanism at the wheels 214.

The wheel 214 of each wheeled leg 21 is here attached to the corresponding lower leg 213 in such a way that its axis of rotation is fixed to lie in a plane roughly parallel to the support of the wheel 214. Each wheel 214 can only perform one rotational movement controlled by the electronics 202 in two directions.

The wheel motor 2140 of each wheel 214 is preferably attached to a wheel hub of the latter and is used to accelerate, i.e., adjust the rotation speed of the wheel 214. This allows each wheel 214 of the wheeled leg robot 2 to be individually driven and braked at different speeds, thereby defining the rolling direction of the whole delivery robot 2.

In particular, there are no motors to steer each wheel 214, i.e., there is no steering mechanism at the wheels 214, and therewith the wheels 214 are defined as non-steerable. The position of the wheels 214 in the cartesian x, y and z direction is allowed to be controlled by the joint architectures and the three-dimensional active suspension of the wheeled legs 21. In other words, the axis of rotation of the wheel 214 is fixed with respect to the lower leg 213.

Swivelling movements of the non-steerable wheels 214 are not provided for or can be changed by a mechanism. In this application, delivery robots 2 with such non-steerable wheels 214 for which optimised control is to be achieved. This means that further mechanical controls and adapted wheels to be controlled do not play a role. In the electronics 202 and/or an additional external computer hardware 3, a software-guided solution for the complicated movement without steerable wheels 214 is achieved.

The electronics 202 comprise a microchip which is operatively connected to every wheel motor 2140 and to actuators for every hip joint 210 and every knee joint 212. These operative connections, and the constructions of the joints and wheel motors 2140 themselves, are realized in such a way, that each revolute joint of the hip joint 210, the knee joint 212, and the wheel motor 2140 of every wheeled leg 21 are operable independently of each other and independently of every hip joint 210, knee joint 212, and wheel motor 2140 of every other wheeled leg 21.

The two non-parallel revolute joints of the hip joint 210 together with the possibility of individual positioning of the two revolute joints of the hip joint 210 and the knee joint 212 and the individual acceleration of the wheel 214 by means of its wheel motor 2140 form a three-dimensional active suspension system or every wheeled leg 21.

The freedom of movement provided by the two non-parallel revolute joints of the hip joints 210 together with the possibility of individual positioning of every revolute joint of every hip joint 210 and every knee joint 212 and the individual acceleration of every wheel 214 by means of its wheel motor 2140 features efficient changes of direction, switching between driving, stepping, and driving while stepping, and stabilization. In particular, it allows for omnidirectional movements: for example, stairs can be traversed by stepping, rolling, or a combination thereof, and direct movements in a direction that does not coincide with the alignment of the wheels can be achieved by stepping.

Here the stabilization also includes balancing with two or more wheels 214 on the ground, e.g., in an upright position with two wheels 214 in the air. More precisely movements can be achieved by the combination of the concepts of
a) individual acceleration of each wheel 214 and
b) positioning of the wheeled legs 21 relative to the surface and relative to the torso 20. Note that b) relates to e.g. stepping movements, which can also be combined with rolling movements, and adaptations of the suspension system to change direction.

For example, changes of direction can be achieved with concept a) making use of friction and different drive torques in different locations, and with concept b) making use of mass distribution, momentum, and inertia.

The versatility of the hip joints 210 together with the possibility of individual actuation of every joint 210, 212 and every wheel motor 2140 allow for great freedom of movement without the need of e.g., additional joints and motors to steer each wheel 214 by relocating its axis of rotation. Also, the versatility of the hip joints 210 is achieved by two comparably simple and robust joints 210, 212 instead of a fragile complex solution.

These aspects moreover provide the advantage of involving minimal hardware, which in turn means lower costs and efforts, as well as less weight to be carried around. The latter fact yields less effects on the performance to be considered in physical models and less energy consumption because of the weight itself as well as because of the lowered computational power needed.

The microchip of the electronics 202, as part of the computation unit, is also operatively connected to the sensor unit and the at least one sensor and the send/receive unit.

The at least one sensor comprises here at least: a depth sensor and / or a camera on each side of the torso 20 and / or an Inertial Measurement Unit (IMU). Optionally, for example one or more lasers and / or one or more motor sensors for wheel motors 2140 and / or one or more joint position encoders detecting the state of a joint and / or one or more actuator sensors for joints and / or one or more mass spectrometers and / or a three hundred and sixty degree camera on the top face of the torso 20 and / or a gyroscope and / or a position sensor using Global Positioning System (GPS) technology may be incorporated in or attached to the delivery robot 2. Every sensor can be incorporated in or attached to the torso 20 and / or one or more of the wheeled legs 21.

The send/receive unit is here a combined wireless sender and receiver, preferably using Wireless Local Area Network (WLAN) technology. Other possibilities include Next Generation Mobile Networks (NGMN) technology, like e.g., 4G, 5G, Bluetooth Low Energy (BLE) technology, and Wireless Personal Area Network (WPAN) technology. The send/receive unit can also work with more than one technology; as BLE and WPAN typically have a lower range than WLAN and NGMN, a combination of long and short range technologies can be advantageous to cover possibly simultaneous communication to external devices farther away, like a server, and devices close by, like a remote control. The send/receive unit is preferably attached to or integrated in the torso 20 respectively the electronics 202.

The electronics 202 can comprise parts incorporated in the torso 20 and / or parts incorporated in one or more of the wheeled legs 21. They can comprise several instead of one microchip and possibly divide tasks among them.

At the left side of Fig. 2, external computer hardware 3, in the form of a laptop, is shown , which could be transported with delivery van 1. The external computer hardware 3 can for example also be a general personal computer, a server at a location accessible via the Internet. Computationally intensive tasks are most preferably performed here in a planning software 31 with the involvement of at least one neural network 32 schematically shown in Fig. 2. This can be carried out in the external computer hardware 3.

At least one neural network 32 can be part of the computer hardware 3 and/or the computation unit in the electronics 202. Alternatively, at least one neural network 32 can be implemented in an external device, like a server or server complex, which can communicate with the computer hardware 3 via, for example, WLAN. In the case of more than one neural network , they can be implemented in the same hardware or distributed across different hardware, including computer hardware 3. If the environmental data maps are variable, the determination of the plan is either based on their state at a given point in time, or on the average over a given period of time.

The here presented approach with the use of neural networks for accomplishing (a) automatic steering motions with non-steerable wheels while (b) also overcoming challenging terrains like steps and stairs is the only one to achieve omnidirectional motions of the mobile robot 1 in real-time, i.e., on high update rates over 5 Hz.

The learning method achieves (real-time) behaviours for the non-steerable platform. These behaviours comprise steerable behaviour over any terrain. The solution presented here moreover is the minimal solution to achieve efficient motions over flat and difficult terrain. Neural networks need to be deployed to achieve this since other known methods cannot achieve this and are slow in computation.

As part of the control of delivery robot 2 is carried out by neural networks, there must be a wireless connection between delivery robot 2 and computer hardware 3. However, the delivery robot 2 can also be moved exclusively by the electronics 202 after appropriate external programming by the supplier. Once the delivery robot 2 has been programmed, i.e. the destination of the delivery, the delivery robot 2 can be automatically controlled to find the destination, deliver the parcels and return to the loading area in the delivery van 1.

Movements and transportation are carried out by means of electronics 202, either by software in electronics 202 or by software on external computer hardware 3.

This last mile delivery robot 2 comprises articulated limbs or wheeled legs 21 with wheels 214 and is meant to cover the last segment of the delivery chain, up to the doorsteps of a customer location. The starting point of the robot journey is the delivery van 1 for parcels delivery, groceries delivery or food delivery of a restaurant. At least one delivery robot 2 is loaded in the interior of the delivery van 1, on a loading area at a local distribution center.

The delivery robot 2, respectively its container 201 is either already loaded in the local distribution center, is loaded in the interior of delivery van 1 during the journey or is loaded once delivery van 1 has reached its destination.

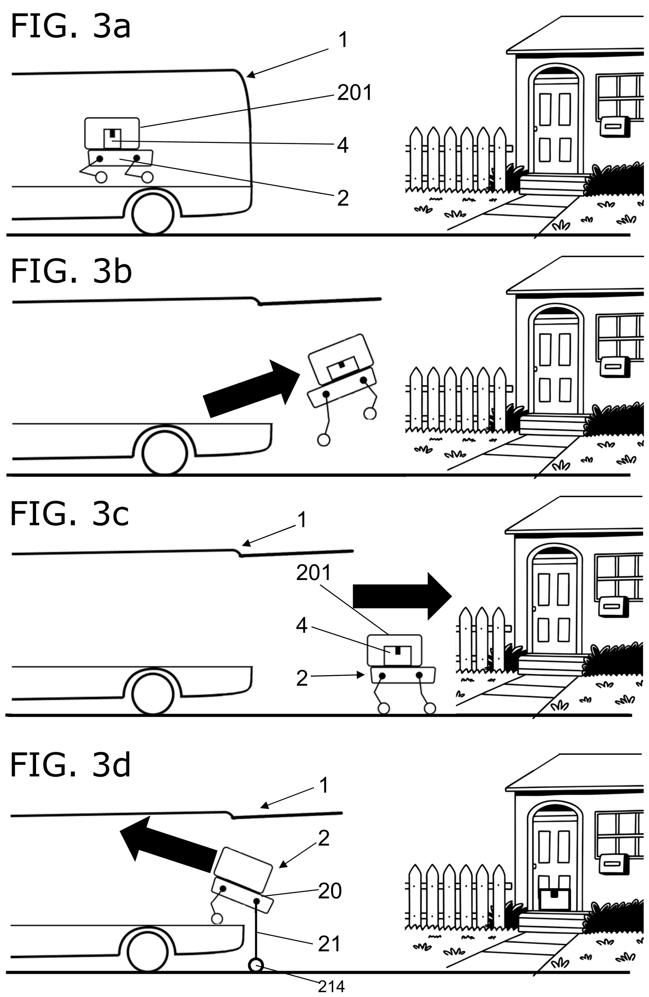

The delivery van 1 is then driven to the vicinity of the destination address and parked there, as shown in Figure 3a. If the delivery robot 2 is already loaded with a parcel 4 at the destination address, the robot 2 is started, a door of the delivery van 1 is opened and the delivery robot 2 can jump out of the delivery van 1 from the loading area of the delivery van 1.

The jumping out takes place by the wheels 214 of all wheeled legs 21 leaving the loading area by the thrust of all wheel motors 2140 on the wheels 214. The wheels 214 lose contact with the loading area and are placed on the ground step by step or simultaneously after an individual or joint flight phase, whereby the electronics 202 with computation unit and the at least one neural network ensures the balancing on the ground, whereby the wheel motors 2140, the hip joints 210 and the knee joints 212 are controlled accordingly by the electronics 202.

The landing of the delivery robot 2 is possible through suitable programming of the electronics 202 respectively the computation unit using a neural network and due to the design of the wheeled legs 21, joints 210, 212 and wheels 214.

The delivery robot 2 can jump out of delivery van 1 without any other aids, such as ramps or ladders, and steers afterwards autonomously to the customer location as shown in Fig. 3c. Also this movement to the customer location is controlled by the electronics 202, via the software on the delivery robot 2 and/or supervised by the external computer hardware 3.

The delivery robot 2 utilizes his locomotion system with electronics 202 and connected units to overcome obstacles like stairs and to jump out of the delivery van 1. The delivery robot 2 navigates by using its electronics 202 and connected units, like the sensor unit with sensors to identify desirable driving areas like sidewalks and to identify and circumnavigate humans and other obstacles. After reaching the last-mile destination at the customer's location, the parcel 4 will be released from the container 201 and the delivery robot 2 will return by teleoperation or autonomously to the delivery van 1.

As schematically shown in Fig. 3d the delivery robot 2 climbs back in a step-by-step re-entry on the loading area in the interior of the delivery van 1.

After rolling up to the delivery van 1, the electronics 202 steer a first wheeled leg 21, which is facing the delivery van 1, onto the loading area, whereby the wheel 214 is set down on the loading area after a swing phase, while a secure stand on the three wheeled legs 21 remaining on the ground is achieved under electronics 202 control. The torso 20 preferably remains in a horizontal alignment, which can be achieved by flexing the hip joints 210 and knee joints 212 of all four wheeled legs 21 accordingly.

The delivery robot 1 is then driven and moved more in the direction of delivery van 1 by driving all wheels 214 of all wheeled legs 21.

At the same time or subsequently, the second wheeled leg 21 facing the delivery van 1 is lifted and set down on the loading area in the delivery van 1 in a second swing phase. The drive of the wheel 214 of this second wheeled leg 21 is started and the delivery robot 2 is moved further in the direction of delivery van 1.

Until a third wheeled leg 21 is lifted and placed on the loading area in a third swing phase, while the weight of the delivery robot 2 is balanced on three wheeled legs 21 on the loading area and one wheeled leg 21 still on the ground.

After the delivery robot 2 continues to move on three wheels 214 on the loading area into the interior, the fourth wheeled leg 21 is finally lifted from the ground and placed on the loading area in a fourth swing phase. During the lifting of the wheeled legs 21, the wheels 214 of the respective raised wheeled leg 21 have no function. The entire delivery robot 2 is pulled into the interior by the driven wheels 214, finally reaching the starting position as shown in Fig. 3a.

Due to the design of the wheeled legs 21 with the hip joints 210 and the knee joints 212, as well as the individually controllable wheels 214, the wheeled legs 21 can be flexibly bent and stretched and driven in a rolling motion individually, whereby this complicated movement can be balanced in a controlled manner and carried out quickly.

The jumping out and landing movement is a gait cycle, while the climbing back movement can be defined as two or four gait cycles, depending on the number of wheeled legs 21.

Each of the four gait cycles of the climbing back of the wheeled legs 21 comprise a swing phase of a wheeled leg 21, with controlled wheel leg 21 lift and subsequent placement of the wheeled leg 21 on the loading area, followed by a rolling phase of all wheels 214 of all wheeled legs 21 either on the ground or the loading area, in direction of the delivery van 1. Each wheeled leg 21 after the other is swung onto the local area with their wheels 214. Followed by a rolling phase of the wheels 214 remaining on the ground and those already swung onto the local area, whereby the rolling movement of the delivery robot 2 into the delivery van 1 is achieved. Until the complete delivery robot 2 with all wheeled legs 21 is moved to a parking space in the interior of the delivery van 1.

Especially regarding the delivery van 1 entrance maneuvre, the method needs no additional components like ramps or lifting devices for return of the delivery robots 2 in the delivery van 1, which increases the last-mile delivery efficiency.

### Method options

The delivery van 1 can be self-driving or driven by a human.

Parcels 4 can be loaded onto the delivery robot 2 in a local distribution center and/or in the interior of the delivery van 1 by an automatic loading unit or by a person. Delivery robots 2 that have already been emptied can be reloaded on delivery van 1 or after returning to the local distribution center.

During the entirety of the process, an operator in stand-by can remotely take over the control of the delivery robot 2 by teleoperation in case the artificial intelligence judges this to be necessary.

### Details of the delivery robot

The energy source of the delivery robot 2 is here a battery placed inside the torso 20, which is operatively connected to the electronics 202. Recharging the delivery robot's 2 battery via the delivery van 1 allows for a reduction in battery size. This innovation offers several benefits, including increased safety, lower costs for the delivery robot 2 and an improved usable payload.

Alternatively, the energy source can for example be an internal combustion engine combined with a fuel tank and an energy transformer which has as output electrical energy and is connected to the electronics 202, or a combination of such an engine and a battery.

The hip joint 210, the knee joint 212 and the wheel motor 2140 of every wheeled leg 21 are preferably electric. Alternatively, one or more of them can be hydraulic or pneumatic.

Although the invention herein has been described with reference to particular embodiments, it is to be understood that these embodiments are merely illustrative of the principles and applications of the present invention. It will be apparent to those skilled in the art that various modifications and variations can be made to the method and apparatus of the present invention without departing from the spirit and scope of the invention. Thus, it is intended that the present invention include modifications and variations that are within the scope of the appended claims and their equivalents.

### LIST OF REFERENCE NUMERALS

1 delivery van
   Interior, loading area,
   local distribution center
   place of arrival
2, 2', 2' delivery robot (for destination address
   20 Torso
      201 Container / Parcel container
         2010 Container flap
         2011 Hinge
         2012 Handle
      202 Electronics (with computation unit, sensor unit, steering unit, send/receive unit, software controlled)
   21 Wheeled leg (2 or 4, most preferred)
      210 Hip joint
      211 Upper leg
      212 Knee joint
      213 Lower leg 214 wheel (Non-steerable)
         2140 Wheel motor
3 Computer hardware (most preferred external)
   31 Planning software
   32 Neural network
4 Parcel
Customer
customer location

## Claims

1. Parcel delivery method, using a delivery van (1) transporting at least one autonomous ground delivery robot (2) to a place of arrival, wherein the delivery robot (2) comprises a torso (20) with integrated electronics (202) and attached container (201) and at least four individual and independently controllable wheeled legs (21), each comprising a hip joint (210), an upper leg (211), a knee joint (212), a lower leg (213), and a wheel (214) with associated motor (2140), wherein the delivery robot (2) can deliver parcels (4) from a loading area of the delivery van (1) to a customer's location,
**characterized by the movement steps of the delivery robot (2) controlled by the electronics (202):**
- jumping out of the delivery robot (2) with the container (201) and loaded parcel (4) from the loading area
- landing with the wheeled legs (21) and associated wheels (214) on the ground, whereby the electronics (202) ensures the balancing on the ground, via control of the wheel motors (2140), the hip joints (210) and the knee joints (212)
- rolling of delivery robot (2) to the customer location and delivering the parcel (4), before
- returning of the delivery robot (2) back to the delivery van (1) and subsequent
- autonomous climbing back of the delivery robot (2) with its wheeled legs (21) in four gait cycles, each comprising a swing phase of a wheeled leg (21), with controlled wheel leg (21) lift and subsequent placement of the wheeled leg (21) on the loading area, followed by a rolling phase of all wheels (214) of all wheeled legs (21) either on the ground or the loading area, until the delivery robot (2) with all wheeled legs (21) is moved to a parking space in the interior.

2. Parcel delivery method according to claim 1, wherein the jumping out and landing step is carried out either by step by step contact of the wheels (214) or simultaneously contact of the wheels (214) before or after an individual or joint flight phase with the ground, controlled by the electronics (202), via the software on the delivery robot (2) and/or supervised by an external computer hardware (3).

3. Parcel delivery method according to one of the preceding claims, wherein the wheels (214) are non-steerable, reaching the delivery robot (2) with omnidirectional movement controlled by the electronics (202) and wheel motor (2140) of each wheeled leg (21) without use of a steering mechanism at the wheels (214).

4. Parcel delivery method according to claim 3, wherein
every hip joint (210), knee joint (212), and wheel motor (2140) of each wheeled leg (21) is independently operable of every hip joint (210), knee joint (212), and wheel motor (2140) of each other wheeled leg (21).

5. Parcel delivery method according to one of the preceding claims, wherein the climbing in-movement is achieved by the combination of a) individual acceleration of each wheel (214) and/or b) positioning of the wheeled legs (21) relative to the ground or loading area surface and relative to the torso (20).

6. Parcel delivery method according to one of the preceding claims, wherein the length of the torso (20) is formed such that all four wheeled legs (21) can pivot freely in the area of their hip joints (210).

7. Parcel delivery method according to one of the preceding claims, wherein the electronics (202) is integrated in the torso (20), comprising a computation unit, a sensor unit, a steering unit and a send/receive unit, which all are software controlled.

8. Parcel delivery method according to one of the preceding claims, wherein the loading of parcels (4) in container (201) is carried out manually by a person or by an automatic loading device in the interior of the delivery van (1).

9. Parcel delivery method according to one of the preceding claims, wherein the delivery van (1) is an autonomously driving vehicle.

10. Use of a delivery robot (2), comprising a torso (20) with integrated electronics (202) and attached container (201) and at least four individual and independently controllable wheeled legs (21), each comprising a hip joint (210), an upper leg (211), a knee joint (212), a lower leg (213), and a wheel (214) with associated motor (2140), in connection with a delivery van (1) for last-mile delivery of parcels (4) to a customer location and autonomous re-climbing in of the delivery robot (2) in the interior of the delivery van (1).
